# EUROPÄISCHE PATENTSCHRIFT

(11) **EP 4 296 030 B1**
(45) Veröffentlichungstag und Bekanntmachung des Hinweises auf die Patenterteilung: **05.11.2025**
(21) Anmeldenummer: 22180674.8
(22) Anmeldetag: 23.06.2022
(51) Int. Cl.: B29C 45/27

(54) **AUFNAHMEKÖRPER ZUR AUFNAHME EINER HEISSKANALDÜSE UND SPRITZGUSSWERKZEUG**
RECEIVING BODY FOR RECEIVING A HOT CHANNEL NOZZLE AND INJECTION MOULD
CORPS DE RÉCEPTION DESTINÉ À LA RÉCEPTION D'UNE BUSE DE CANAL CHAUFFANT ET OUTIL DE MOULAGE PAR INJECTION

(43) Veröffentlichungstag der Anmeldung: 27.12.2023
(73) Patentinhaber: Witosa GmbH, 35066 Frankenberg/Wangershausen (DE)
(72) Erfinder: Glittenberg, Torsten, 35066 Frankenberg (DE); Hallenberger, Martin, 35088 Frohnhausen (DE)
(74) Vertreter: Walther Bayer Faber Patentanwälte PartGmbB

(56) Entgegenhaltungen:
- CA-A1- 2 441 139
- US-A1- 2016 067 899
- US-B2- 7 845 936

## Beschreibung

Die Erfindung betrifft einen Aufnahmekörper zur Aufnahme einer Heißkanaldüse an einem Heißkanalverteilerkörper eines Spritzgusswerkzeuges, aufweisend einen Aufnahmeabschnitt, in dem die Heißkanaldüse aufnehmbar ist und aufweisend einen Andruckabschnitt, gegen den ein Werkzeugkörper zur Anlage bringbar ist, um die Heißkanaldüse an dem Heißkanalverteilerkörper zu halten, wobei der Aufnahmekörper einteilig und frei von einem Heizelement ausgebildet ist. Weiterhin betrifft die Erfindung ein Spritzgusswerkzeug mit wenigstens einer Heißkanaldüse, die mittels eines solchen Aufnahmekörpers am Heißkanalverteilerkörper angeordnet ist.

### STAND DER TECHNIK

Grundsätzlich weisen die Bestandteile eines Spritzgusswerkzeuges deutlich unterschiedliche Temperaturen auf, so muss etwa der zumeist plattenförmige Heißkanalverteilerkörper gemeinsam mit der Heißkanaldüse auf einer Temperatur gehalten werden, bei der die plastifizierte Kunststoffmasse fließfähig bleibt, und zugleich weist der Werkzeugkörper des Spritzgusswerkzeuges selbst jedoch eine niedrige Temperatur auf, insbesondere um die Abkühlzeiten der Spritzgussform, in dem die Kavität zur Aufnahme der Kunststoffmasse und zur späteren Abformung des Kunststoffbauteils eingebracht ist, kurz zu halten. Zudem dient der Werkzeugkörper in Form einer Zwischenplatte auch zur haltenden Anordnung der Heißkanaldüse am Heißkanalverteilerkörper, sodass ein hierfür vorgesehener Aufnahmekörper einerseits mit der heißen Heißkanaldüse und dem heißen Heißkanalverteilerkörper und andererseits mit dem kalten Werkzeugkörper insbesondere in Form der Zwischenplatte in Kontakt steht.

Die DE 10 2015 008 578 A1 offenbart beispielsweise einen Aufnahmekörper zur Aufnahme einer Heißkanaldüse an einem Heißkanalverteilerkörper eines Spritzgusswerkzeuges, und der Aufnahmekörper weist einen Aufnahmeabschnitt auf, der in Kontakt mit der Heißkanaldüse steht, und ferner weist dieser einen Andruckabschnitt auf, über den der Aufnahmekörper gegen eine Vorkammerbuchse des Spritzgusswerkzeuges zur Anlage gelangt, welche Vorkammerbuchse einen Werkzeugkörper bildet, das eine entsprechend geringere Temperatur aufweist. Hingegen weist die Düsenspitze und zudem auch der Düsenkopf der Heißkanaldüse ein Heizelement auf, um beide Endseiten der Heißkanaldüse entsprechend mit Peaks in der Temperatur relativ zur Umgebung und zum Mittelbereich der Heißkanaldüse zu beheizen.

So entsteht ein hoher Energieverlust, da der Aufnahmeabschnitt des Aufnahmekörpers zur Aufnahme der Heißkanaldüse möglichst auf der Temperatur der Heißkanaldüse gehalten werden muss, um diese im Kopfbereich nicht auszukühlen, in dem die Heißkanaldüse aufgenommen ist, und andererseits steht der Andruckabschnitt des Aufnahmekörpers mit dem Werkzeugkörper im Kontakt und kühlt den Aufnahmeabschnitt folglich ab. Daraus ergibt sich, dass ein zusätzliches Heißelement im Aufnahmekörper angeordnet werden muss, um diesen zu beheizen und damit zu verhindern, dass die Heißkanaldüse im Kopfbereich auskühlt. Alternativ oder zusätzlich kann auch die Heißkanaldüse selbst im Kopfbereich Heizelemente oder mehrere oder eine Anhäufung von Windungen eines Heizelementes aufweisen, um die Kunststoffschmelze im Schmelzkanal der Heißkanaldüse über der gesamten Erstreckung der Heißkanaldüse auf der erforderlichen Temperatur zu halten.

Die US 2016/0067899 A1 offenbart einen Aufnahmekörper zur Aufnahme einer Heißkanaldüse an einem Heißkanalverteilerkörper eines Spritzgusswerkzeuges, aufweisend einen Aufnahmeabschnitt, in dem die Heißkanaldüse aufnehmbar ist und aufweisend einen Andruckabschnitt, gegen den ein Werkzeugkörper zur Anlage bringbar ist, um die Heißkanaldüse an dem Heißkanalverteilerkörper zu halten, wobei der Aufnahmekörper einteilig ausgebildet ist. Mehrere Schraubendurchgänge bieten dabei eine Reduzierung der absoluten Wärmeleitung von dem Heißkanalverteilerkörper in den Werkzeugkörper, da dadurch der Materialquerschnitt geschwächt wird. Allerdings ist der Effekt der verringerten Wärmeleitung eher als marginal zu bezeichnen.

Die US 7,845,936 B2 offenbart einen Aufnahmekörper zur Aufnahme einer Heißkanaldüse an einem Heißkanalverteilerkörper eines Spritzgusswerkzeuges, aufweisend einen Aufnahmeabschnitt, in dem die Heißkanaldüse aufnehmbar ist und aufweisend einen Andruckabschnitt, gegen den ein Werkzeugkörper zur Anlage bringbar ist, um die Heißkanaldüse an dem Heißkanalverteilerkörper zu halten, wobei der Aufnahmekörper einteilig ausgebildet ist. Dabei ist angegeben, dass der Andruckabschnitt, gegen den der Werkzeugkörper zur Anlage bringbar ist, nur einen einzigen Kontaktbereich aufweist, um den Wärmeverlust aus dem Aufnahmekörper gegen den kalten Werkzeugkörper zu minimieren.

Daraus folgen Energieverluste, da die Wärme, die mit solchen Heizelementen in den Aufnahmekörper oder in den Kopfbereich der Heißkanaldüse eingebracht wird, über den Kontakt mit dem Werkzeugkörper wieder weggekühlt wird, sodass nicht nur Heizenergie, sondern auch Kühlenergie aufgewendet werden muss. Darüber hinaus kann ein komplexes Steuerverfahren notwendig werden, wenn die Heizelemente der Heißkanaldüse um den Schaft und den Düsenabschnitt der Heißkanaldüse einerseits und ein Heizelement im Kopfbereich der Heißkanaldüse andererseits in der einzubringenden Wärmemenge geregelt werden müssen, da der Körper, der durch die separaten Heizelemente beheizt wird, schließlich einteilig und folglich mit einem Wärmefluss ineinander übergeht.

### OFFENBARUNG DER ERFINDUNG

Die Aufgabe der Erfindung ist eine verbesserte Anordnung einer Heißkanaldüse in einem Spritzgusswerkzeug, wobei der Energieaufwand zum Betrieb des Spritzgusswerkzeuges weiter gesenkt werden soll.

Diese Aufgabe wird ausgehend von einem Aufnahmekörper gemäß dem Oberbegriff des Anspruches 1 und ausgehend von einem Spritzgusswerkzeug gemäß dem Oberbegriff des Anspruches 13 mit den jeweils kennzeichnenden Merkmalen gelöst. Vorteilhafte Ausführungsformen sind in den Unteransprüchen angegeben.

Zur Lösung der Aufgabe sieht die Erfindung vor, dass der Andruckabschnitt hülsenartig ausgeführt ist und den Aufnahmeabschnitt umschließt, wobei der Aufnahmekörper zwischen dem Aufnahmeabschnitt und dem Andruckabschnitt eine Wärmebarrierestruktur mit wenigstens einer Hohlkammer aufweist, wobei zwischen dem Aufnahmeabschnitt und dem Andruckabschnitt mehrere auf dem Umfang verteilte oder umlaufende Verbindungsstege ausgebildet sind, die gemeinsam mit den Hohlkammern die Wärmebarrierestruktur bilden.

Kerngedanke der Erfindung ist die Optimierung des strukturellen Aufbaus des Aufnahmekörpers zur Aufnahme der Heißkanaldüse im Spritzgusswerkzeug, wobei über den Aufnahmekörper die Heißkanaldüse so an dem Heißkanalverteilerkörper gehalten werden kann, dass der Kontakt zwischen der Heißkanaldüse beziehungsweise dem Aufnahmekörper und dem Heißkanalverteilerkörper lediglich über eine Flächenpressung erzeugt wird. Befindet sich zwischen dem Aufnahmeabschnitt und dem Andruckabschnitt des Aufnahmekörpers eine Wärmebarrierestruktur, so sorgt diese dafür, dass die Wärme aus dem heißen Aufnahmeabschnitt nur vermindert oder minimal in den Andruckabschnitt übergehen kann. So kann der Aufnahmeabschnitt die Heißkanaldüse hoher Temperatur aufnehmen, und der Andruckabschnitt kann mit dem Werkzeugkörper niedriger Temperatur in Kontakt gebracht werden, wobei der Wärmestrom vom Aufnahmeabschnitt in den Andruckabschnitt minimiert wird.

Die Verbindungsstege weisen einzeln und insbesondere summarisch einen Querschnitt auf, der hinreichend ist, um die auftretenden Kräfte zwischen der Heißkanaldüse und dem Heißkanalverteilerkörper zu übertragen, sodass der insbesondere einteilig ausgeführte Aufnahmekörper in sich eine hinreichende mechanische Belastbarkeit für den gewählten Einsatzzweck bietet. Die Wärmebarrierestruktur ist damit strukturell derart ausgeführt, dass auftretende Kräfte zwischen der Heißkanaldüse und dem Heißkanalverteilerkörper beziehungsweise dem Werkzeugkörper übertragen werden können. Die Wärmebarrierestruktur kann auf einer Wabenstruktur, einer Struktur aus Stegen und Hohlkammern, aus Filamenten, aus dünnen Trennwänden und/oder dergleichen aufgebaut sein, wobei das Einbringen von Hohlkammern zwischen dem Aufnahmeabschnitt und dem Andruckabschnitt die wesentliche Isolationswirkung erzielt, sodass der Aufnahmekörper im Betrieb einen Aufnahmeabschnitt einer hohen Temperatur und einen Andruckabschnitt einer niedrigen Temperatur aufweisen kann, ohne dass größere Wärmemengen zwischen den beiden Abschnitten übergehen.

Hohlkammern im Sinne der vorliegenden Erfindung können im Inneren des Aufnahmekörpers liegende geschlossene oder zur Außenseite offene Hohlräume bezeichnen, die aus einem ansonsten aus Vollmaterial hergestellten Aufnahmekörper einen materialreduzierten Aufnahmekörper mit hohl ausgebildeten Bereichen entstehen lassen. Im Sinne der Erfindung bezeichnen Hohlkammern aber auch an oder in der Oberfläche des Aufnahmekörpers liegende Einkerbungen oder Einbuchtungen mit oder ohne Hinterschneidungen, die geeignet sind, einen Wärmefluss im Aufnahmekörper selbst in technisch sinnvollem Maße zu reduzieren.

Die vorliegende Erfindung richtet sich insbesondere auf einen Aufnahmekörper, der mittels eines generativen Fertigungsverfahrens hergestellt ist. Generative Fertigungsverfahren, wie beispielsweise Verfahren beruhend auf dem Prinzip des "Laser Selective Melting - SLM", ermöglichen die Herstellung von 3D-Druckbauteilen, die innenliegende Konturen aufweisen können, die mit konventionellen Fertigungsverfahren nicht herstellbar sind.

So kann der Aufnahmekörper mit einer Wärmebarrierestruktur hergestellt werden, die auf der Schaffung von innenliegenden Hohlkammern beruht, sodass zwischen den Hohlkammern beispielsweise lediglich Stege oder Material-Übergangsquerschnitte zwischen dem Aufnahmeabschnitt und dem Andruckabschnitt stehen bleiben, und die mit den Hohlkammern umgeben sind. Eine derartige Struktur kann bei Verwendung von generativen Fertigungsverfahren so optimiert werden, dass trotz eines sehr geringen Materialquerschnittes hohe Kräfte übertragen werden können, sodass der Aufnahmekörper die Heißkanaldüse aufnimmt und hohe Kräfte von der Heißkanaldüse in den Aufnahmekörper und schließlich in den Heißkanalverteilerkörper oder den Werkzeugkörper übertragen werden können. Zugleich ermöglicht die Verwendung von generativen Fertigungsverfahren jedoch eine Minimierung des Werkstoffquerschnittes, sodass eine Wärmeleitung im Material des Aufnahmekörpers minimiert wird.

Der Aufnahmekörper ist mit besonderem Vorteil napfartig oder hülsenartig ausgeführt, und weist der Andruckabschnitt eine Hülsenform auf, so kann dieser den Aufnahmeabschnitt umschließen. Der Andruckabschnitt erstreckt sich dabei um eine Mittelachse herum und ist in axialer Erstreckungsrichtung begrenzt von einer Anlagefläche zur Anlage gegen den Werkzeugkörper und einer gegenüberliegenden Bodenfläche zur Anlage gegen den Heißkanalverteilerkörper. Befindet sich der Aufnahmekörper im eingebauten Zustand, so wird dieser verspannt zwischen dem Werkzeugkörper und dem Heißkanalverteilerkörper.

Der Andruckabschnitt kann von mehreren Hohlkammern durchzogen sein, die sich beispielsweise parallel zur Mittelachse des Aufnahmekörpers erstrecken und röhrenartig ausgebildet sind. Somit wird der Materialquerschnitt zwischen der Anlagefläche und der Bodenfläche minimiert, obwohl dennoch eine hohe strukturelle Steifigkeit vorliegt.

Im Besonderen können sich die röhrenartigen Hohlkammern von der Anlagefläche bis zur Bodenfläche durchgängig erstrecken. Der Aufnahmekörper dabei kann so aufgebaut sein, dass sich der Aufnahmeabschnitt zur Aufnahme der Heißkanaldüse innerhalb des hülsenförmigen Andruckabschnittes befindet, und eine Bodenfläche des Aufnahmeabschnittes kann übergehen in die Bodenfläche des Andruckabschnittes, sodass die Bodenflächen gemeinsam eine Planebene bilden. Mit dieser Planebene kann der Aufnahmekörper gegen den Heißkanalverteilerkörper zur Anlage gebracht werden. Die Wärmebarrierestruktur erstreckt sich folglich im Besonderen und/oder vorzugsweise in radialer Richtung zwischen dem innenliegenden Aufnahmeabschnitt und dem den Aufnahmeabschnitt umschließenden außenseitigen Andruckabschnitt, wobei der Andruckabschnitt selbst vorteilhafterweise ebenfalls wenigstens eine Wärmebarrierestruktur aufweist.

So können auch die Hohlkammern mit den zwischen den Hohlkammern eingebrachten Stegen und Übergängen sich hauptsächlich radial erstrecken, wobei die Stege zwischen den Hohlkammern der Wärmebarrierestruktur folglich nicht die Kräfte aufnehmen müssen, die zwischen dem Heißkanalverteilerkörper und dem Werkzeugkörper vorherrschen. Diese Kräfte sind Druckkräfte, die lediglich auf den Andruckabschnitt wirken, wohingegen der Übergang in den Aufnahmeabschnitt mittels der Wärmebarrierestruktur zumindest diese Druckkräfte nicht aufnimmt.

Vorzugsweise wird die Heißkanaldüse in den Aufnahmekörper eingeschraubt, wofür der Aufnahmeabschnitt ein Aufnahmegewinde aufweist. Somit kann auch der Aufnahmeabschnitt zumindest abschnittsweise eine Hülsenform aufweisen, die innenseitig das Aufnahmegewinde aufweist und außenseitig die Wärmebarrierestruktur. Unterseitig weist der Aufnahmeabschnitt eine massive Struktur auf, wobei das Aufnahmegewinde ein Innengewinde bildet und wobei sich zwischen dem Abschnitt des Aufnahmegewindes und der Bodenfläche durch den massiven Bereich des Aufnahmeabschnittes ein Schmelzkanal erstrecken kann, durch den die plastifizierte Kunststoffschmelze aus dem Heißkanalverteilerkörper in die Heißkanaldüse überführt werden kann.

Auf dem Außenumfang des Aufnahmekörpers und damit auf dem Außenumfang des hülsenförmigen Andruckabschnittes können Vertiefungen eingebracht sein, die so ausgeführt sind, dass darin ein Hakenschlüssel eingesetzt werden kann. Ein Hakenschlüssel kann beispielsweise dann zum Einsatz kommen, wenn die Heißkanaldüse in das Aufnahmegewinde des Aufnahmekörpers eingeschraubt werden muss. Hierfür kann ein Schraubwerkzeug Verwendung finden, das mit einem Werkzeugansatz der Heißkanaldüse in Eingriff gebracht wird, und wird auf die Heißkanaldüse ein Drehmoment mit dem Schraubwerkzeug aufgebracht, so kann der Aufnahmekörper mit dem Hakenschlüssel in Anordnung in den Vertiefungen auf dem Außenumfang des Aufnahmekörpers in diesen das notwendige Gegenmoment eingebracht werden.

Auch ist es denkbar, dass in der Außenumfangsfläche eine Wabenstruktur eingebracht ist. Durch die Wabenstruktur kann der Aufnahmekörper bei reduziertem Materialeinsatz weiter ausgesteift werden. Zudem verbessert sich durch die mit der Wabenstruktur einhergehende vergrößerte Oberfläche die Konvektionskühlung in der Außenumfangsfläche des Aufnahmeabschnittes.

Der Werkstoff des Aufnahmekörpers kann einen Werkzeugstahl umfassen, insbesondere einen Stahl mit der Spezifikation 1.2709 bzw. X3NiCoMoTi18-9-5 und/oder ein Titanwerkstoff Ti6Al4V.

So ist es von besonderem Vorteil, dass der Aufnahmekörper gemäß der Erfindung frei von einem Heizelement ausgebildet ist. Durch die erfindungsgemäße Wärmebarrierestruktur erfolgt keine so starke Auskühlung des Aufnahmeabschnittes und damit des Kopfes der Heißkanaldüse, dass diese nachgeheizt werden müsste. Gleichwohl wird der Wärmefluss von dem Aufnahmekörper in den Heißkanalverteilerkörper beziehungsweise den Werkzeugkörper minimiert, sodass einerseits ein weiteres Heizelement im Bereich des Düsenkopfes der Heißkanaldüse nicht notwendig ist und andererseits der Werkzeugkörper mit einer geringeren Kühlleistung gekühlt werden muss, wodurch sich eine weitere Energieeinsparung ergibt.

Die Erfindung richtet sich weiterhin auf ein Spritzgusswerkzeug mit wenigstens einer Heißkanaldüse, die mittels eines Aufnahmekörpers an einem Heißkanalverteilerkörper angeordnet ist, wobei der Aufnahmekörper einen Aufnahmeabschnitt aufweist, in dem die Heißkanaldüse aufgenommen ist und aufweisend einen Andruckabschnitt, gegen den ein Werkzeugkörper des Spritzgusswerkzeugs zur Anlage gebracht ist und sodass der Aufnahmekörper zwischen dem Heißkanalverteilerkörper und dem Werkzeugkörper einteilig ausgeführt und klemmend gehalten ist, um die Heißkanaldüse am Heißkanalverteilerkörper zu halten. Dabei ist zur Lösung der Aufgabe vorgesehen, dass der Andruckabschnitt hülsenartig ausgeführt ist und den Aufnahmeabschnitt umschließt, wobei der Aufnahmekörper zwischen dem Aufnahmeabschnitt und dem Andruckabschnitt eine Wärmebarrierestruktur mit wenigstens einer Hohlkammer aufweist.

Die weiteren Merkmale und zugehörigen Vorteile, die obenstehend im Zusammenhang mit dem Aufnahmekörper dargelegt wurden, finden für das erfindungsgemäße Spritzgusswerkzeug in gleicher Weise Berücksichtigung.

Mit besonderem Vorteil liegt der Aufnahmekörper mit einer Bodenfläche an dem Heißkanalverteilerkörper derart an, dass der Aufnahmekörper auf der Oberfläche des Heißkanalverteilerkörpers eine Planarbewegung ausüben kann. So können Wärmedehnungen ausgeglichen werden, ohne dass eine Biegebelastung auf die Heißkanaldüse einwirkt, insbesondere wenn der plattenartige Heißkanalverteilerkörper einen Temperaturdrift aufweist, wenn dieser von einem Ruhezustand des Spritzgusswerkzeuges in einen Betriebszustand überführt und insofern aufgeheizt wird. Die Planarbeweglichkeit der Bodenfläche des Aufnahmekörpers über der Oberfläche des Heißkanalverteilerkörpers ermöglicht insofern einen Ausgleich von wärmebedingten Formänderungen, und die Heißkanaldüse übt folglich lediglich eine Normalkraft auf die Oberfläche des Heißkanalverteilerkörpers aus.

Mit weiterem Vorteil sind der Aufnahmekörper und insbesondere auch die Heißkanaldüse frei von einem Heizelement ausgebildet, sodass weder der Aufnahmekörper noch die Heißkanaldüse im Bereich der Aufnahme in oder an dem Aufnahmekörper ein Heizmittel aufweist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht durch ein Spritzgusswerkzeug mit der Anordnung eines Aufnahmekörpers zur Aufnahme einer Heißkanaldüse an einem Heißkanalverteilerkörper,
- Figur 2: eine perspektivische Ansicht eines Heißkanalverteilerkörpers mit mehreren Heißkanaldüsen,
- Figur 3: eine Querschnittsansicht durch den erfindungsgemäß ausgeführten Aufnahmekörper,
- Figur 4: eine perspektivische Ansicht des Aufnahmekörpers,
- Figur 5: eine Ansicht des Aufnahmekörpers mit einer an diesem angebrachten Heißkanaldüse sowie mit einem Schraubwerkzeug außer Eingriff mit dem Aufnahmekörper,
- Figur 6: eine Ansicht des Aufnahmekörpers mit einer an diesem angebrachten Heißkanaldüse sowie mit einem Schraubwerkzeug in Eingriff mit dem Aufnahmekörper und
- Figur 7: eine perspektivische Ansicht des Schraubwerkzeuges zum Einschrauben der Heißkanaldüse in den Aufnahmekörper.

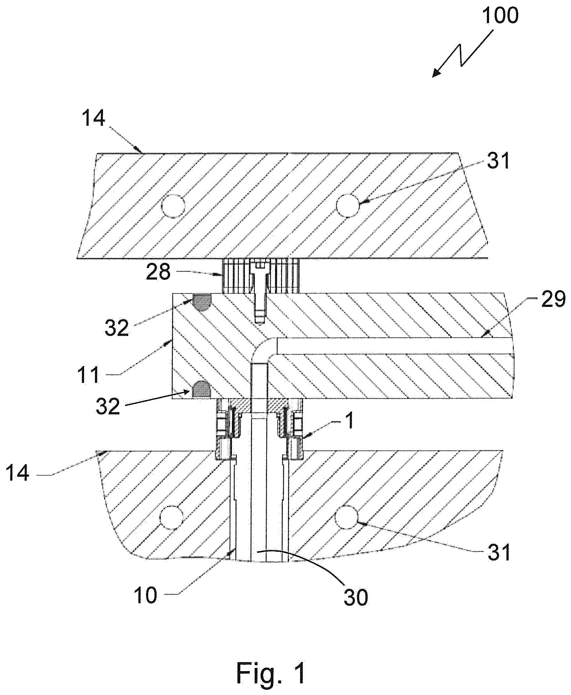

Figur 1 zeigt in einer Querschnittsansicht die Anordnung eines Aufnahmekörpers 1 in einem Spritzgusswerkzeug 100, aufweisend einen ersten und einen zweiten Werkzeugkörper 14, zwischen denen ein Heißkanalverteilerkörper 11 angeordnet ist. Im ersten Werkzeugkörper 14 ist die Heißkanaldüse 10 eingesetzt, sodass der erste Werkzeugkörper 14 beispielhaft eine Formplatte des Spritzgusswerkzeuges bildet, und der hinterseitige Werkzeugkörper 14 bildet eine Aufspannplatte des Spritzgusswerkzeuges zur Aufnahme des plattenartigen Heißkanalverteilerkörpers 11. Zwischen dem Heißkanalverteilerkörper 11 und dem die Aufspannplatte bildenden Werkzeugkörper 14 ist ein Druckstück 28 als Distanzelement eingesetzt.

Zur Aufnahme der Heißkanaldüse 10 an dem Heißkanalverteilerkörper 11 dient der Aufnahmekörper 1, wobei die Heißkanaldüse 10 im Aufnahmekörper 1 aufgenommen ist. Der Aufnahmekörper 1 ist zwischen dem vorderen Werkzeugkörper 14 in Form der Formplatte und dem Heißkanalverteilerkörper 11 eingespannt.

Im Heißkanalverteilerkörper 11 ist ein Schmelzkanal 29 gezeigt, der mit der Anordnung der Heißkanaldüse 10 durch den Aufnahmekörper 1 hindurch in einen Durchtrittskanal 30 für die Schmelze innerhalb der Heißkanaldüse 10 übergeht.

Die Werkzeugkörper 14 weisen Kühlkanäle 31 auf, um die Werkzeugkörper 14 zu kühlen, und der Heißkanalverteilerkörper 11 weist Heizelemente 32 auf, um diesen zu heizen und auf einer Temperatur zu halten, die es ermöglicht, dass die Kunststoffschmelze im plastifizierten Zustand durch den Schmelzkanal 29 hindurchtreten kann. Mittels des Druckstückes 28 und mittels des Aufnahmekörpers 1 wird der Heißkanalverteilerkörper 11 zu beiden Werkzeugkörpern 14 auf Distanz gehalten.

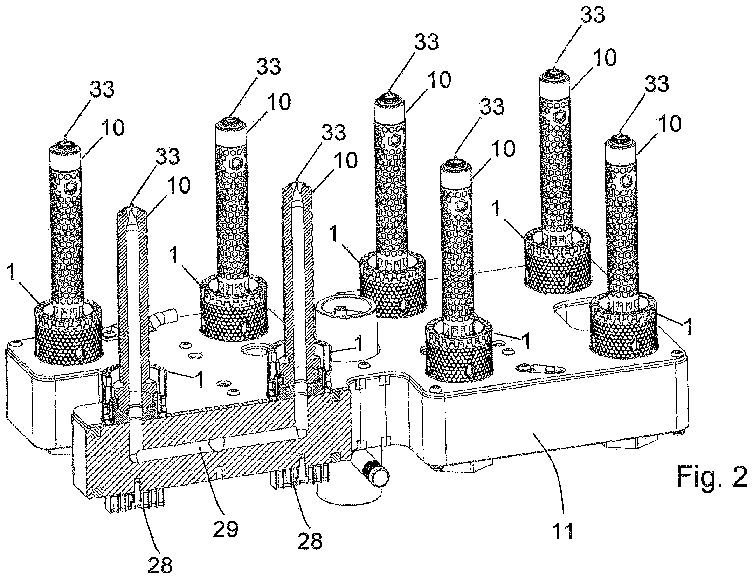

Figur 2 zeigt in einer perspektivischen Ansicht einen plattenförmigen Heißkanalverteilerkörper 11, auf dem insgesamt acht Heißkanaldüsen 10 mit jeweils zugeordneten Aufnahmekörpern 1 angeordnet sind, von denen zwei vorderseitige Heißkanaldüsen 10 mit den zugeordneten Aufnahmekörpern 1 geschnitten dargestellt sind. Die Aufnahmekörper 1 nehmen die Heißkanaldüsen 10 über eine Schraubverbindung auf, sodass die Heißkanaldüsen 10 mit den Aufnahmekörpern 1 eine jeweilige Einheit bilden, die auf die Oberfläche des plattenförmigen Heißkanalverteilerkörpers 11 lediglich plan aufgesetzt sind, um bedarfsweise eine Planarbewegung ausführen können. Beispielsweise dann, wenn der Heißkanalverteilerkörper 11 aufgeheizt wird, und folglich eine temperaturbedingte Formänderung erfährt, können die Aufnahmekörper 1 auf der Oberfläche des Heißkanalverteilerkörpers 11 abgleiten, sodass die Heißkanaldüsen 10 spannungsfrei bleiben. Der Grund dieser Notwendigkeit liegt darin, dass die Heißkanaldüsen 10 mit der Düsenspitze 33 als ortsfester Aufnahmepunkt im konstant temperierten Spritzgusswerkzeug eingesetzt sind, und wird der Heißkanalverteilerkörper 11 aufgeheizt, kann sich dieser ausdehnen, sodass bei einer starren Aufnahme der Heißkanaldüsen 10 an dem Heißkanalverteilerkörper 11 entsprechende Spannungen entstehen können, die sogar eine Heißkanaldüse 10 nachhaltig schädigen kann. Die Aufnahmekörper 1 sind insofern dafür ausgebildet, mit einer unterseitigen Bodenfläche auf der Oberfläche des Heißkanalverteilerkörpers 11 lediglich aufzusitzen und in der Kontaktebene zwischen Aufnahmekörper 1 und Heißkanalverteilerkörper 11 eine Planarbewegung auszuführen.

Unterseitig der Anordnung der Aufnahmekörper 1 mit den Heißkanaldüsen 10 sind die Druckstücke 28 angeordnet, sodass diese mit dem weiteren Werkzeugkörper gemäß Figur 1 die Aufspannung der Heißkanaldüsen 10 auf dem Heißkanalverteilerkörper 11 in einer Verspannungsrichtung ermöglichen, die der Längserstreckungsrichtung der Heißkanaldüsen 10 entspricht.

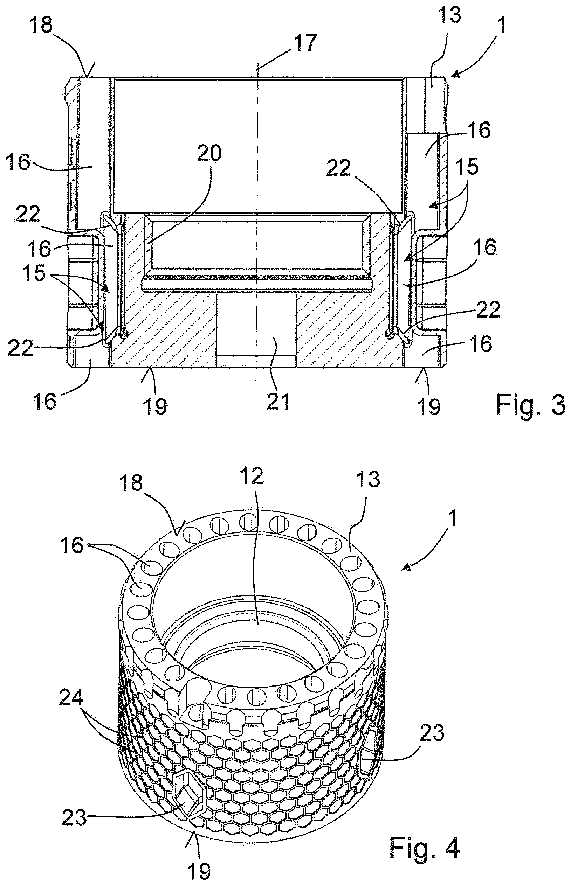

Figur 3 zeigt den Aufnahmekörper 1 in einem Querschnitt, der sich im Wesentlichen als Hülsenkörper oder Ringkörper um eine Mittelachse 17 herum erstreckt. Der Aufnahmekörper 1 weist einen innenseitigen Aufnahmeabschnitt 12 auf, in oder an dem die Heißkanaldüse 10 aufgenommen werden kann. Hierfür besitzt der Aufnahmeabschnitt 12 ein Aufnahmegewinde 20, in das die Heißkanaldüse 10 eingeschraubt wird.

Unterseitig vom Aufnahmegewinde 20 erstreckt sich ein Schmelzenkanal 21 bis zu einer Bodenfläche 19 hin, wobei die Bodenfläche 19 die Fläche bildet, über die der Aufnahmekörper 1 am Heißkanalverteilerkörper 11 angeordnet wird und eine gemeinsame untere Grenzfläche des Aufnahmeabschnitt 12 und des Andruckabschnittes 13 bildet.

Der Aufnahmeabschnitt 12 ist hülsenförmig umgeben vom Andruckabschnitt 13, der sich oberseitig von einer Anlagefläche 18 beginnend bis zur Bodenfläche 19 hinweg erstreckt. Wird der Aufnahmekörper 1 zwischen dem Heißkanalverteilerkörper und dem Werkzeugkörper verspannt, wie in Figur 1 dargestellt, so wird der Andruckabschnitt 13 mit einer Druckkraft beaufschlagt. Die Struktur des Andruckabschnittes 13 ist dabei so gewählt, dass zwischen der Anlagefläche 18 und der Bodenfläche 19 hohe Druckkräfte übertragen werden können.

Der Andruckabschnitt 13 weist mehrere Hohlkammern 16 auf, die sich von der Anlagefläche 18 bis zur Bodenfläche 19 hin durch den Ringquerschnitt des Andruckabschnittes 13 hindurch erstrecken. Der verbleibende Materialquerschnitt ist so bemessen, dass die auftretenden Druckkräfte sicher übertragen werden können, durch die Minimierung des Materialquerschnittes wird jedoch der Wärmetransport in die Anlagefläche 18 minimiert.

Der Übergang zwischen dem innenseitigen Aufnahmeabschnitt 12 und dem diesen umgebenden äußeren Andruckabschnitt 13 ist die Wärmebarrierestruktur 15 eingebracht. Die Wärmebarrierestruktur 15 weist mehrere Hohlkammern 16 auf, die mit Verbindungsstegen 22 zwischen den beiden Abschnitten 12 und 13 unterteilt sind. Durch die eingebrachten Hohlkammern 16 ist insbesondere der Materialquerschnitt zwischen dem Aufnahmeabschnitt 12 und dem Andruckabschnitt 13 in dem radialen Ringspalt minimiert, über den sich die Wärmebarrierestruktur 15 erstreckt. Der Querschnitt zeigt dabei mehrere Hohlkammern 16, wodurch deutlich wird, dass der verbleibende Querschnitt über die Verbindungsstege 22 deutlich minimiert ist, sodass ein Wärmeübergang vom Aufnahmeabschnitt 12 in den Andruckabschnitt 13 insbesondere im Bereich der Wärmebarrierestruktur 15 minimiert ist. Die Wärmebarrierestruktur 15 setzt sich dabei mit den Hohlkammern 16 auch im Andruckabschnitt 13 in Richtung zur Anlagefläche 18 fort, sodass auch bis zum Kontakt an den gekühlten Werkzeugkörper 14 nur eine minimale Wärmemenge über den Aufnahmekörper 1 abgeleitet wird.

Figur 4 zeigt eine perspektivische Ansicht des Aufnahmekörpers 1 mit dem innenseitigen Aufnahmeabschnitt 12 und den diesen umgebenden ringförmigen Andruckabschnitt 13, aufweisend die oberseitige Anlagefläche 18. Gezeigt sind dabei über dem Umfang gleich verteilt mehrere Hohlkammern 16, die sich röhrenartig von der Anlagefläche 18 bis zur unteren Bodenfläche 19 erstrecken.

Auf dem Außenumfang weist der Andruckabschnitt 13 eine Wabenstruktur 24 auf, die eine den Andruckabschnitt 13 aussteifende Wirkung entfaltet. Ferner sind auf dem Außenumfang mehrere Vertiefungen 23 eingebracht, die dazu ausgebildet sind, einen Hakenschlüssel aufzunehmen, sodass die Heißkanaldüse 10 in den Aufnahmekörper 1 eingeschraubt und mit dem Hakenschlüssel festgehalten werden kann.

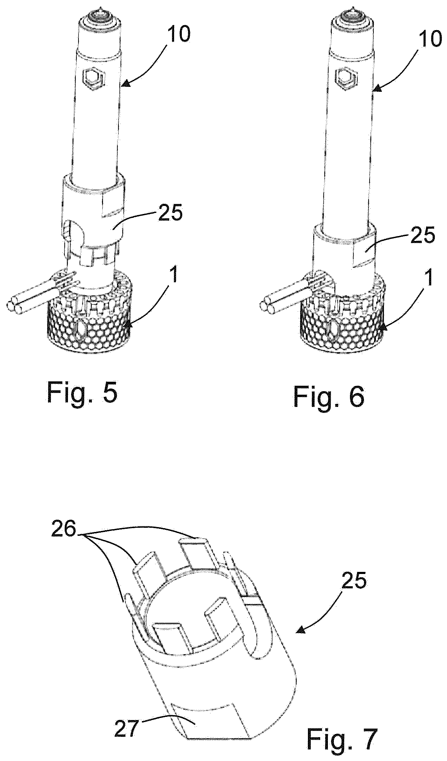

Zur Einschraubung der Heißkanaldüse 10 in den Aufnahmekörper 1 zeigen die Figuren 5 und 6 eine Anordnung eines Schraubwerkzeuges 25 auf dem Schaft der Heißkanaldüse 10, wobei in Figur 5 das Schraubwerkzeug 25 noch nicht eingesetzt ist, und in Figur 6 ist das Schraubwerkzeug 25 am Kopfende der Heizkanaldüse 10 angebracht, wofür die Heißkanaldüse 10 in nicht näher gezeigter Weise einen sich in den Aufnahmekörper 1 hinein erstreckenden Werkzeugansatz aufweist.

Figur 7 zeigt hierbei die perspektivische Ansicht des Schraubwerkzeuges 25, an dem mehrere Kronenabschnitte 26 angebracht sind, und das Schraubwerkzeug 25 kann mit den Kronenabschnitten 26 in den Ringspalt zwischen dem Aufnahmekörper 1 und der Heißkanaldüse 10 eingesetzt werden. Über den Werkzeugansatz 27 am Schraubwerkzeug 25 kann ein Schraubwerkzeug, beispielsweise ein Maulschlüssel, angesetzt werden, mit dem schließlich unter gleichzeitiger Gegendrehung des Aufnahmekörpers 1 mittels des Hakenschlüssels die Heißkanaldüse 10 gemäß Figur 3 im Aufnahmegewinde 20 des Aufnahmeabschnittes 12 des Aufnahmekörpers 1 eingeschraubt werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Die Erfindung ist in dem beigefügten Satz von Ansprüchen definiert.

### Bezugszeichenliste:

- 1: Aufnahmekörper
- 10: Heißkanaldüse
- 11: Heißkanalverteilerkörper
- 12: Aufnahmeabschnitt
- 13: Andruckabschnitt
- 14: Werkzeugkörper
- 15: Wärmebarrierestruktur
- 16: Hohlkammer
- 17: Mittelachse
- 18: Anlagefläche
- 19: Bodenfläche
- 20: Aufnahmegewinde
- 21: Schmelzkanal
- 22: Verbindungssteg
- 23: Vertiefung
- 24: Wabenstruktur
- 25: Schraubwerkzeug
- 26: Kronenabschnitt
- 27: Werkzeugansatz
- 28: Druckstück
- 29: Schmelzkanal
- 30: Durchtrittskanal
- 31: Kühlkanal
- 32: Heizelement
- 33: Düsenspitze

- 100: Spritzgusswerkzeug

## Patentansprüche

1. Aufnahmekörper (1) zur Aufnahme einer Heißkanaldüse (10) an einem Heißkanalverteilerkörper (11) eines Spritzgusswerkzeuges (100), aufweisend einen Aufnahmeabschnitt (12), in dem die Heißkanaldüse (10) aufnehmbar ist und aufweisend einen Andruckabschnitt (13), gegen den ein Werkzeugkörper (14) zur Anlage bringbar ist, um die Heißkanaldüse (10) an dem Heißkanalverteilerkörper (11) zu halten, wobei der Aufnahmekörper (1) einteilig und frei von einem Heizelement ausgebildet ist, wobei der Andruckabschnitt (13) hülsenartig ausgeführt ist und den Aufnahmeabschnitt (12) umschließt, **dadurch gekennzeichnet, dass** der Aufnahmekörper (1) zwischen dem Aufnahmeabschnitt (12) und dem Andruckabschnitt (13) eine Wärmebarrierestruktur (15) mit wenigstens einer Hohlkammer (16) aufweist, und wobei zwischen dem Aufnahmeabschnitt (12) und dem Andruckabschnitt (13) mehrere auf dem Umfang verteilte oder umlaufende Verbindungsstege (22) ausgebildet sind, die gemeinsam mit den Hohlkammern (16) die Wärmebarrierestruktur (15) bilden.

2. Aufnahmekörper (1) nach Anspruch 1,
**dadurch gekennzeichnet,**
**dass** der Aufnahmekörper (1) mittels eines generativen Fertigungsverfahrens hergestellt ist.

3. Aufnahmekörper (1) nach Anspruch 1 oder 2,
**dadurch gekennzeichnet,**
**dass** der Andruckabschnitt (13) sich mit seiner Hülsenform um eine Mittelachse (17) herum erstreckt und axial auf einer ersten Seite von einer Anlagefläche (18) zur Anlage gegen den Werkzeugkörper (14) und auf einer zweiten Seite von einer Bodenfläche (19) zur Anlage gegen den Heißkanalverteilerkörper (11) begrenzt ist.

4. Aufnahmekörper (1) nach Anspruch 1 bis 3,
**dadurch gekennzeichnet,**
**dass** der Andruckabschnitt (13) von mehreren Hohlkammern (16) durchzogen ist, die röhrenartig ausgebildet sind und sich von der Anlagefläche (18) bis zur Bodenfläche (19) erstrecken.

5. Aufnahmekörper (1) nach einem der vorgenannten Ansprüche,
**dadurch gekennzeichnet,**
**dass** der Aufnahmeabschnitt (12) eine Bodenfläche aufweist, die in einer gemeinsamen Planebene in die Bodenfläche (19) des Andruckabschnittes (13) übergeht.

6. Aufnahmekörper (1) nach einem der vorgenannten Ansprüche,
**dadurch gekennzeichnet,**
**dass** der Aufnahmeabschnitt (12) ein Aufnahmegewinde (20) aufweist, in das die Heißkanaldüse (10) einschraubbar ist.

7. Aufnahmekörper (1) nach einem der vorgenannten Ansprüche,
**dadurch gekennzeichnet,**
**dass** das Aufnahmegewinde (20) als ein Innengewinde ausgebildet ist, wobei sich zwischen dem Abschnitt des Aufnahmegewindes (20) und der Bodenfläche (19) ein Schmelzkanal (21) erstreckt.

8. Aufnahmekörper (1) nach einem der vorgenannten Ansprüche,
**dadurch gekennzeichnet,**
**dass** auf dem Außenumfang des Aufnahmekörpers (1) Vertiefungen (23) eingebracht sind, die so ausgeführt sind, dass darin ein Hakenschlüssel einsetzbar ist.

9. Aufnahmekörper (1) nach einem der vorgenannten Ansprüche,
**dadurch gekennzeichnet,**
**dass** in der Außenumfangsfläche eine Wabenstruktur (24) eingebracht ist.

10. Aufnahmekörper (1) nach einem der vorgenannten Ansprüche,
**dadurch gekennzeichnet,**
**dass** der Werkstoff des Aufnahmekörpers (1) einen Werkzeugstahl aufweist, insbesondere einen Stahl mit der Spezifikation 1.2709 bzw. X3NiCoMoTi18-9-5 und/oder ein Titanwerkstoff Ti6Al4V aufweist.

11. Spritzgusswerkzeug (100) mit wenigstens einer Heißkanaldüse (10), die mittels eines Aufnahmekörpers (1) an einem Heißkanalverteilerkörper (11) angeordnet ist, wobei der Aufnahmekörper (1) einen Aufnahmeabschnitt (12) aufweist, in dem die Heißkanaldüse (10) aufgenommen ist und aufweisend einen Andruckabschnitt (13), gegen den ein Werkzeugkörper (14) des Spritzgusswerkzeugs (100) zur Anlage gebracht ist und sodass der Aufnahmekörper (1) zwischen dem Heißkanalverteilerkörper (11) und dem Werkzeugkörper (14) einteilig und frei von einem Heizelement ausgeführt und klemmend gehalten ist, um die Heißkanaldüse (10) am Heißkanalverteilerkörper (11) zu halten, **dadurch**
**gekennzeichnet, dass**
der Andruckabschnitt (13) hülsenartig ausgeführt ist (Seite 6, 2. Absatz) und den Aufnahmeabschnitt (12) umschließt, wobei der Aufnahmekörper (1) zwischen dem Aufnahmeabschnitt (12) und dem Andruckabschnitt (13) eine Wärmebarrierestruktur (15) mit wenigstens einer Hohlkammer (16) aufweist, und wobei zwischen dem Aufnahmeabschnitt (12) und dem Andruckabschnitt (13) mehrere auf dem Umfang verteilte oder umlaufende Verbindungsstege (22) ausgebildet sind, die gemeinsam mit den Hohlkammern (16) die Wärmebarrierestruktur (15) bilden.

12. Spritzgusswerkzeug (100) nach Anspruch 11,
**dadurch gekennzeichnet,**
**dass** der Aufnahmekörper (1) mit einer Bodenfläche (19) an dem Heißkanalverteilerkörper (11) derart anliegt, dass der Aufnahmekörper (1) auf der Oberfläche des Heißkanalverteilerkörpers (11) eine Planarbewegung ausüben kann.

13. Spritzgusswerkzeug (100) nach einem der Ansprüche 11 oder 12,
**dadurch gekennzeichnet,**
**dass** der Aufnahmekörper (1) frei von einem Heizelement ausgebildet ist und/oder dass die Heißkanaldüse (10) im Bereich der Aufnahme in oder an dem Aufnahmekörper (1) frei von einem Heizelement ausgebildet ist.

## Claims

1. Receiving body (1) for receiving a hot runner nozzle (10) on a hot runner manifold body (11) of an injection molding tool (100), comprising a receiving section (12) in which the hot runner nozzle (10) can be received, and comprising a pressure section (13) against which a mold body (14) can be brought into contact in order to hold the hot runner nozzle (10) on the hot runner manifold body (11), wherein the receiving body (1) is designed as a single piece and free of a heating element, wherein the pressure section (13) of the receiving body (1) is designed in the form of a sleeve and surrounds the receiving section (12),
**characterized in that** the receiving body (1) has a heat barrier structure (15) with at least one hollow chamber (16) between the receiving section (12) and the pressure section (13), and wherein a plurality of connecting webs (22) distributed around the circumference or encircling the circumference are formed between the receiving section (12) and the pressure section (13), which together with the hollow chambers (16) form the heat barrier structure (15) .

2. Receiving body (1) according to claim 1,
**characterized in that**
**in that** the receiving body (1) is manufactured by means of a generative manufacturing process.

3. Receiving body (1) according to claim 1 or 2,
**characterized in that**
**in that** the pressure section (13) extends with its sleeve shape around a central axis (17) and is bounded axially on a first side by a contact surface (18) for contact against the tool body (14) and on a second side by a base surface (19) for contact against the hot runner manifold body (11).

4. Receiving body (1) according to claims 1 to 3,
**characterized in that**
**in that** the pressure section (13) is traversed by a plurality of hollow chambers (16) which are tubular in design and extend from the contact surface (18) to the base surface (19).

5. Receiving body (1) according to one of the aforementioned claims, **characterized in that**
**in that** the receiving section (12) has a base surface which merges into the base surface (19) of the pressure section (13) in a common plane.

6. Receiving body (1) according to one of the preceding claims,
**characterized in that**
**in that** the receiving section (12) has a receiving thread (20) into which the hot runner nozzle (10) can be screwed.

7. Receiving body (1) according to one of the preceding claims,
**characterized in that**
that the receiving thread (20) is designed as an internal thread, with a melt channel (21) extending between the section of the receiving thread (20) and the base surface (19).

8. Receiving body (1) according to one of the preceding claims,
**characterized in that**
that recesses (23) are formed on the outer circumference of the receiving body (1), which are designed so that a hook wrench can be inserted into them.

9. Receiving body (1) according to one of the preceding claims,
**characterized in that**
**in that** a honeycomb structure (24) is incorporated in the outer circumferential surface.

10. Receiving body (1) according to one of the preceding claims,
**characterized in that**
**in that** the material of the receiving body (1) comprises tool steel, in particular steel with the specification 1.2709 or X3NiCoMoTi18-9-5, and/or a titanium material Ti6Al4V.

11. Injection molding tool (100) with at least one hot runner nozzle (10) which is arranged on a hot runner manifold body (11) by means of a receiving body (1), wherein the receiving body (1) having a receiving section (12) in which the hot runner nozzle (10) is received and having a pressure section (13) against which a mold body (14) of the injection molding tool (100) is brought into contact, and such that the receiving body (1) is designed as a single piece and free of a heating element between the hot runner manifold body (11) and the mold body (14) and is held in a clamping manner in order to hold the hot runner nozzle (10) on the hot runner manifold body (11),
**characterized in that**
the pressure section (13) is designed in the form of a sleeve (page 6, 2nd paragraph) and surrounds the receiving section (12), wherein the receiving body (1) has a heat barrier structure (15) with at least one hollow chamber (16), and wherein a plurality of connecting webs (22) distributed around the circumference or encircling the circumference are formed between the receiving section (12) and the pressure section (13), which together with the hollow chambers (16) form the heat barrier structure (15).

12. Injection molding tool (100) according to claim 11,
**characterized in that**
**in that** the receiving body (1) rests against the hot runner manifold body (11) with a bottom surface (19) in such a way that the receiving body (1) can perform a planar movement on the surface of the hot runner manifold body (11).

13. Injection molding tool (100) according to one of claims 11 or 12,
**characterized in that**
**in that** the receiving body (1) is designed without a heating element and/or **in that** the hot runner nozzle (10) is designed without a heating element in the area of the receiving body (1) or on the receiving body (1).

## Revendications

1. Corps de réception (1) destiné à recevoir une buse à canal chaud (10) sur un corps de distributeur à canal chaud (11) d'un outil de moulage par injection (100), comportant une partie de réception (12) dans laquelle la buse à canal chaud (10) peut être reçue, et comportant une partie de pression (13) contre laquelle un corps d'outil (14) peut être appliqué afin de maintenir la buse à canal chaud (10) sur le corps de distributeur à canal chaud (11), le corps de réception (1) étant réalisé d'un seul tenant et dépourvu d'élément chauffant, la partie de pression (13) de l' est réalisée en forme de manchon et entoure la partie de réception (12),
**caractérisé en ce que**
le corps de réception (1) de l' présente, entre la partie de réception (12) et la partie de pression (13), une structure de barrière thermique (15) avec au moins une chambre creuse (16), et plusieurs nervures de liaison (22) réparties sur la circonférence ou périphériques sont formées entre la partie réceptrice (12) et la partie de pression (13), lesquelles forment conjointement avec les chambres creuses (16) la structure de barrière thermique (15) .

2. Corps de réception (1) selon la revendication 1,
**caractérisé en ce que**
le corps de réception (1) est fabriqué au moyen d'un procédé de fabrication génératif.

3. Corps de réception (1) selon la revendication 1 ou 2,
**caractérisé en ce que**
**en ce que** la partie de pression (13) s'étend avec sa forme de manchon autour d'un axe central (17) et est délimitée axialement, d'un premier côté, par une surface d'appui (18) pour s'appuyer contre le corps d'outil (14) et, d'un deuxième côté, par une surface de fond (19) pour s'appuyer contre le corps de distributeur à canal chaud (11).

4. Corps de réception (1) selon les revendications 1 à 3,
**caractérisé en ce que**
la section de pression (13) de l' est traversée par plusieurs chambres creuses (16) qui sont de forme tubulaire et s'étendent de la surface d'appui (18) jusqu'à la surface de fond (19).

5. Corps de réception (1) selon l'une des revendications précédentes,
**caractérisé en ce que**
**en ce que** la partie de réception (12) présente une surface de fond qui se prolonge dans un plan commun dans la surface de fond (19) de la partie de pression (13).

6. Corps de réception (1) selon l'une des revendications précédentes,
**caractérisé en ce que**
**en ce que** la partie de réception (12) présente un filetage de réception (20) dans lequel la buse à canal chaud (10) peut être vissée.

7. Corps de réception (1) selon l'une des revendications précédentes,
**caractérisé en ce que**
le filetage de réception (20) est conçu comme un filetage intérieur, un canal de fusion (21) s'étendant entre la section du filetage de réception (20) et la surface de fond (19).

8. Corps de réception (1) selon l'une des revendications précédentes,
**caractérisé en ce que**
des renfoncements (23) sont pratiqués sur la circonférence extérieure du corps de réception (1), lesquels sont conçus de manière à pouvoir y insérer une clé à crochet.

9. Corps de réception (1) selon l'une des revendications précédentes,
**caractérisé en ce que**
par le fait qu'une structure alvéolaire (24) est réalisée dans la surface périphérique extérieure.

10. Corps de réception (1) selon l'une des revendications précédentes,
**caractérisé en ce que**
**en ce que** le matériau du corps de réception (1) comprend un acier à outils, en particulier un acier de spécification 1.2709 ou X3NiCoMoTi18-9-5 et/ou un matériau à base de titane Ti6Al4V.

11. Outil de moulage par injection (100) comprenant au moins une buse à canal chaud (10) qui est disposée sur un corps de distribution à canal chaud (11) au moyen d'un corps de réception (1), le corps de réception (1) comportant une partie de réception (12) dans laquelle est logée la buse à canal chaud (10) et comportant une partie de pression (13) contre laquelle est appliqué un corps d'outil (14) de l'outil de moulage par injection (100), de sorte que le corps de réception (1) est réalisé d'un seul tenant entre le corps de distribution à canal chaud (11) et le corps d'outil (14), est exempt d'élément chauffant et est maintenu par serrage afin de maintenir la buse à canal chaud (10) sur le corps de distribution à canal chaud (11),
**caractérisé en ce que**
la partie de pression (13) est réalisée sous forme de manchon (page 6, 2e paragraphe) et entoure la partie de réception (12), le corps de réception (1) présentant, entre la partie de réception (12) et la partie de pression (13), une structure de barrière thermique (15) avec au moins une chambre creuse (16), et plusieurs nervures de liaison (22) réparties sur la circonférence ou périphériques étant formées entre la partie de réception (12) et la partie de pression (13), lesquelles forment conjointement avec les chambres creuses (16) la structure de barrière thermique (15).

12. Moule d'injection (100) selon la revendication 11,
**caractérisé en ce que**
**que** le corps de réception (1) repose avec une surface de fond (19) contre le corps de distribution à canaux chauds (11) de telle sorte que le corps de réception (1) peut exercer un mouvement plan sur la surface du corps de distribution à canaux chauds (11).

13. Moule d'injection (100) selon l'une des revendications 11 ou 12,
**caractérisé en ce que**
**en ce que** le corps de réception (1) est conçu sans élément chauffant et/ou **en ce que** la buse à canal chaud (10) est conçue sans élément chauffant dans la zone de réception dans ou sur le corps de réception (1).
